Europäisches Patentamt

European Patent Office

Office européen des brevets

(19)

(11) Publication number: **0 095 190**
**B1**

(12)     **EUROPEAN PATENT SPECIFICATION**

(45) Date of publication of patent specification: **15.03.89**

(21) Application number: **83105180.0**

(22) Date of filing: **25.05.83**

(51) Int. Cl.⁴: **F 02 D 41/34,** F 02 D 41/26,
F 02 D 41/18, F 02 D 37/02,
F 02 M 69/04

(54) Electronically controlled injection system for internal combustion engines.

(30) Priority: **26.05.82 JP 87848/82**
**28.05.82 JP 89925/82**

(43) Date of publication of application:
**30.11.83 Bulletin 83/48**

(45) Publication of the grant of the patent:
**15.03.89 Bulletin 89/11**

(84) Designated Contracting States:
**DE FR GB IT SE**

(56) References cited:
**FR-A-1 294 906**
**GB-A-2 086 080**
**GB-A-2 086 491**
**US-A-2 721 100**
**US-A-3 750 632**

(73) Proprietor: **HITACHI, LTD.**
**6, Kanda Surugadai 4-chome Chiyoda-ku**
**Tokyo (JP)**

(72) Inventor: **Oosuga, Minoru**
**Yuhoryo 20-3, Ayukawacho-6-chome**
**Hitachi-shi (JP)**
Inventor: **Nishimura, Yutaka**
**3271-89, Nakane**
**Katsuta-shi (JP)**
Inventor: **Oyama, Yoshishige**
**24-18, Higashioshima-3-chome**
**Katsuta-shi (JP)**

(74) Representative: **Patentanwälte Beetz sen. -**
**Beetz jun. Timpe - Siegfried - Schmitt-Fumian**
**Steinsdorfstrasse 10**
**D-8000 München 22 (DE)**

Courier Press, Leamington Spa, England.

## Description

The present invention relates to an electronically controlled fuel supply system for injection type internal combustion engines according to the preamble of claim 1.

Such an electronically controlled fuel supply system is known from US-A-3 750 632.

This known control system includes a function generator which is fed with input signals corresponding to at least two different engine operational parameters, such as the position of the accelerator pedal and the engine speed. The function generator controls in dependence on these input signals the amount of fuel supplied to the cylinders so as to maintain a desired excess air coefficient λ under all operational conditions of the engine. The function generator controls the fuel and the air supplied as well as the ignition timing.

A disadvantage of this known electronic control system resides in that the functions provided by the function generator are fixed and cannot be adapted to different types of engines without hardware modifications.

A further known fuel supply system for engines where each combustion chamber is provided with an injection valve is disclosed in a paper 720052 entitled "Exhaust Emission Control by the Ford programmed Combustion process-PROCO" published at the Automotive Engineering Congress, Detroit, Michigan, January 10-14, 1972. In such a system for direct fuel supply into the cylinders the timing and duration of fuel injection are set on the basis of an instruction applied to the internal combustion engine so as to be suitable for the running conditions of the engine on one hand, and the intake air quantity is electronically controlled so that a desired air-fuel ratio can be obtained with respect to the fuel supply quantity which depends on the set fuel injection period. Particularly, it is required for this electronic control system to attain lean combustion so as to improve the specific fuel consumption. Further, in such direct cylinder fuel supply systems fuel must be injected under high pressure conditions within the compression stroke which makes fuel injection control difficult and requires specifically designed injectors.

It is the object of the present invention to provide an electronically controlled fuel supply system for injection type internal combustion engines for supplying fuel into the combustion chambers, wherein the intake air quantity is closed-loop controlled so as to obtain a desired air-fuel ratio with respect to the fuel supply quantity, and which can be adapted without hardware modifications to various engine types.

The above object is achieved according to claim 1. The dependent claims relate to preferred embodiments.

The electronically controlled fuel supply system according to the invention for injection type internal combustion engines having a plurality of combustion chambers each provided with a fuel injector, an intake air path supplying air to the combustion chambers and an exhaust path discharging the exhaust gas from the combustion chambers, comprises

- a throttle valve actuator actuating the throttle valve provided in the intake air path,
- speed detecting means detecting the rotational speed of the engine,
- instructing means, e.g. the accelerator pedal, instructing the operation of the engine,
- determining means determining the valve open duration of the fuel injector on the basis of an instruction signal from the instructing means and the rotational speed by retrieving the corresponding value of the valve open duration out of a previously stored memory and determining the fuel injection initiation timing and the ignition timing,
- air quantity determining means determining the air quantity to be sucked into the intake air path on the basis of the rotational speed and the valve open duration determined by the fuel injection initiation and ignition timing determining means, and
- controlling means closed-loop controlling the intake air quantity via the throttle valve actuator such that the intake air quantity detected by an air flow meter coincides with the intake air quantity determined by the air quantity determining means;

it is characterized in that

the fuel injection initiation and ignition timing determining means determine the valve open duration by retrieving corresponding values out of a map previously stored in the memory and the fuel injection initiation timing in accordance with the rotational speed of the engine and the corresponding valve open duration such that the valve open duration is terminated before the ignition time is reached.

The invention will be explained with more details with reference to the accompanying drawings, wherein

Fig. 1 is a diagram illustrating the whole configuration of the system according to an embodiment of the present invention;

Fig. 2 is a block diagram illustrating the hardware structure of the microcomputer of Fig. 1;

Fig. 3 is a cross-section illustrating the configuration of an embodiment of the injector of Fig. 1;

Fig. 4 is a time chart for explaining the operation of the injector of Fig. 3;

Fig. 5 is a graph showing the fuel injection quantity in dependence of the valve open duration;

Fig. 6 is a diagram illustrating the configuration of the throttle valve actuator of Fig. 1;

Figs. 7 and 8 are graphs comprising values of a map stored in the ROM for retrieving the valve open duration and the intake air quantity in accordance with the operational conditions of the engine;

Fig. 9 is a block diagram illustrating the closed-loop control circuit for intake air quantity control;

Fig. 10 is a graph comprising values of a map for retrieving the ignition timing;

Fig. 11 is a diagram for explaining the relation between injection and ignition timing;

Fig. 12 is a graph comprising values of a map for retrieving the injection start timing;

Fig. 13 is a diagram illustrating the determination of cylinders for injection;

Fig. 14 is a flowchart showing the operation of the fuel and ignition system;

Fig. 15A, 15B and 15C are graphs showing experimental results obtained with the system according to the present invention in comparison with the prior art system disclosed in the above-mentioned paper 720052;

Fig. 16 is a diagram for explaining the principle of correction of injection timing;

Fig. 17 is a cross-section illustrating the schematic configuration of an embodiment of the vibration means for the fuel injector;

Fig. 18 is a cross-section illustrating the configuration of the fuel injector of Fig. 17;

Figs. 19A, 19B and 19C are time charts for explaining various examples of operation of the fuel injector of Fig. 18;

Figs. 20A and 20B are graphs showing the basic characteristics of an ultrasonic vibrator element;

Figs. 21A and 21B are graphs showing the characteristics of the ultrasonic vibrator element with respect to the fuel quantity;

Fig. 22 is a graph showing the frequency characteristic of the ultrasonic vibrator element with respect to the fuel quantity;

Fig. 23 is a graph showing experimental results obtained with the fuel injector according to Fig. 18 concerning the specific fuel consumption;

Figs. 24 and 25 are cross-sections of modifications of the fuel holding portion of the fuel injector of Fig. 18, and

Fig. 26 is a cross-section illustrating an embodiment of the arrangement of the fuel injector and the ignition plug.

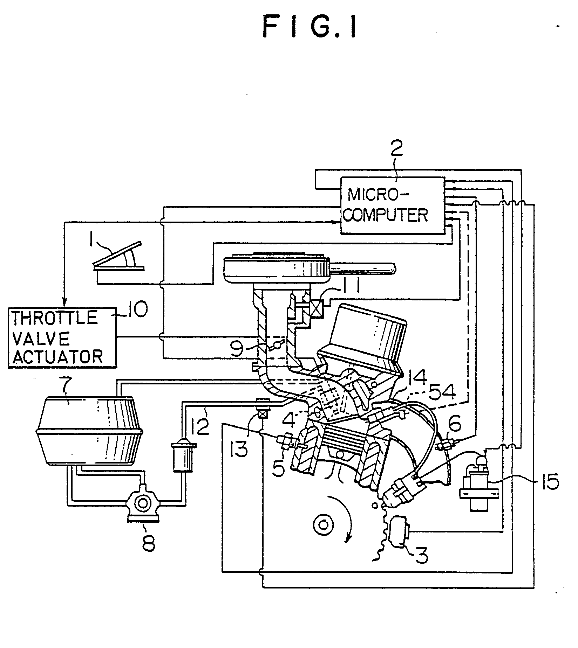

The system shown in Fig. 1 comprises an accelerator angle sensor 1, a microcomputer 2, a crank pedal angle sensor 3, a fuel injector 4, a cooling water temperature sensor 5, an oxygen ($O_2$) sensor 6, a fuel tank 7, a high pressure pump 8, a throttle valve 9, a throttle valve actuator 10, an air flow meter 11 constituted by a hot wire sensor, a fuel line 12, a piezo type fuel pressure sensor 13, an ignition plug 14, an ignition coil 15 and a cylinder pressure sensor 54.

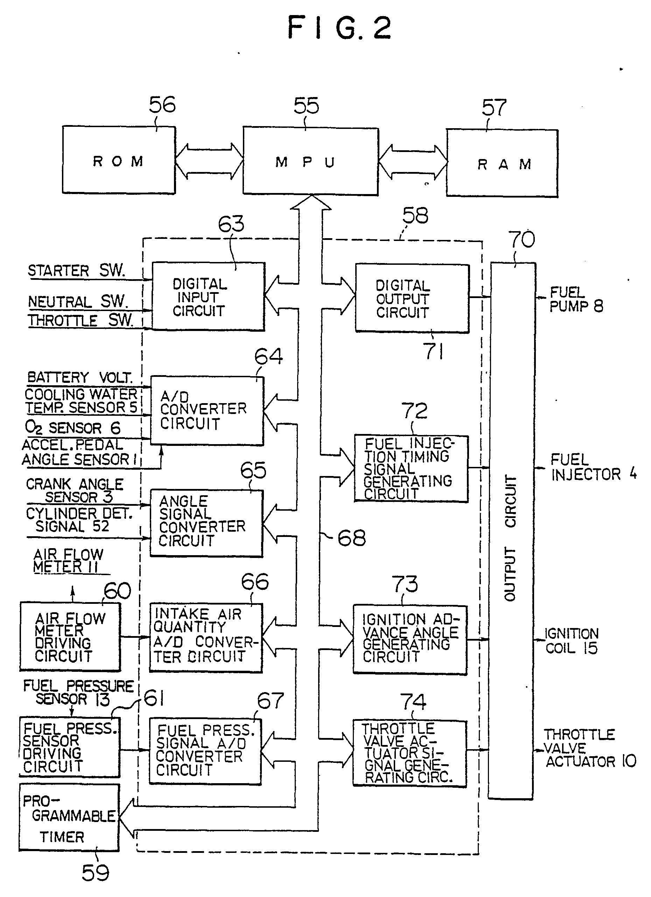

Fig. 2 shows the hardware structure of the microcomputer 2 and the periphery thereof. It comprises a micro-processing unit (MPU) 55, a programable read only memory (ROM) 56, a random access memory (RAM) 57, a large scale integration (LSI) input/output circuit 58, a programable timer 59 for setting the timing of retrieval of air flow quantity, and a hot wire sensor driving circuit 60 supplying a controlled current to the hot wire air flow meter 11 maintained at a predetermined value, the current value depending on the intake air quantity. The system further comprises a fuel pressure sensor driving circuit 61 supplying a predetermined voltage to the fuel pressure sensor 13 of piezo type and detecting a current change corresponding to a change in pressure.

Now, the structure of the input/output circuit 58 will be described. A digital input circuit 63 receives digital signals from a starter switch which is operated at the engine start, a neutral switch indicating a neutral condition such as idling operation, and a throttle switch for detecting the open/closed position of the throttle valve 9. An A/D converter circuit 64 A/D-converts the battery voltage and analog signals from the cooling water temperature sensor 5, the $O_2$ sensor 6 and the accelerator pedal angle sensor 1. An angle signal converter circuit 65 receives a pulse signal from the crank angle sensor 3 and a cylinder determining signal 52 from a magnetic pickup which will be described later. An intake air quantity A/D converter circuit 66 A/D-converts the signal from the air flow meter driving circuit 60. A fuel pressure signal A/D converter circuit 67 A/D-converts the signal from the fuel pressure sensor driving circuit 61. The digital signals from the circuits 63 to 67 are fed to the MPU 55 through a bus 68 and, if necessary, stored in the RAM 57. A digital output circuit 71, a fuel injection timing signal generating circuit 72, an ignition advance angle generating circuit 73 and a throttle valve actuator signal generating circuit 74 produce control signals on the basis of the data calculated in the MPU 55. These control signals are supplied through an output circuit 70 to the fuel pump 8, the fuel injector 4, the ignition coil 15 and the throttle valve actuator 10.

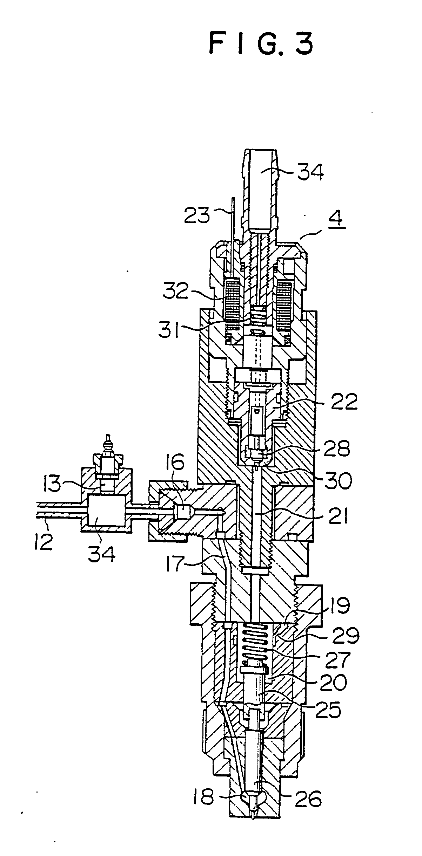

Fig. 3 shows the configuration of a high pressure fuel injector 4 employed in the system of the present embodiment. The high pressure fuel is supplied into a reserve well 18 from the fuel line 12 through a fuel inlet 16 and a fuel path 17. At the same time the fuel is led to an accumulator 20 through an annular path 19 and a fixed orifice 29. The accumulator 20 communicates with a pilot valve 22 through a fuel path 21. The input terminal 23 of the pilot valve 22 is supplied with a control signal from the microcomputer 2. Fuel is returned to the fuel tank 7 via a drain hole 34. Although the fuel pressure in the reserve well 18 is equal to that in the accumulator 20 in the closed state of the pilot valve 22, the needle 26 is in closed position due to the load of a spring 27 and to the pressure difference between the area above the piston 25 and the needle 26. Thereafter, when a valve opening signal is applied to the input terminal 23, the needle valve 28 is moved upward to open so that the fuel in the accumulator 20 flows back through the fuel path 21 and the pilot valve 22 and the drain hole 34. Thus, the fuel pressure in the accumulator 20 decreases. The fuel pressure in the reserve well 18, however, is maintained as it was without decreasing owing to the throttling effect of the fixed orifice 29 connecting the accumulator 20 and the reserve well 18 to each other. Thus, the needle 26 is moved upward, and fuel is injected because the force directed upward and acting at the needle 26 surpasses the force of the spring 27. Thereafter, when the needle 28 of the pilot valve 22 is closed again, the fuel pressure comes back to the previous state, and the needle 26 is closed to end the injection. The force applied to the needle 28 of the pilot valve 22 may be reduced by selecting a small valve seat 30 even if the fuel supply pressure is high, which allows to reduce the force of the spring 31 and thereby to reduce capacity and size of the coil 32.

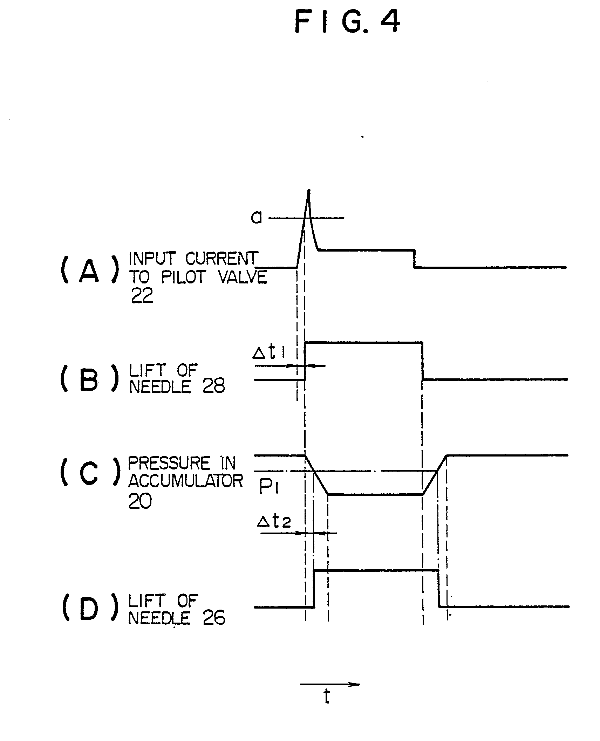

Fig. 4 shows the operation of the injector 4 of Fig. 3. In the drawing, (A) shows the waveform of the current supplied to the input terminal 23 of the pilot valve 22, (B) shows the lifting state of the needle 28 of the pilot valve 22, (C) shows the change of the fuel pressure in the accumulator 20, and (D) shows the lifting state of the needle 26. As indicated in (B), the lifting of the needle 28 is delayed by $\triangle t1$ from the beginning of application of the current to the input terminal 23 because the needle 28 is lifted when the current according to (A) of Fig. 4 has reached a value $a$ producing an electromagnetic force surpassing the force of the spring 31 after the beginning, of current application. The pressure in the accumulator 20 begins to decrease from the time at which the needle 28 has been lifted, as shown in Fig. 4 (C). When the pressure in the accumulator 20 has reached P1, the needle 26 is lifted due to the fuel pressure as shown in Fig. 4 (D) with a delay of $\triangle t2$ from the beginning of lowering of the pressure in the accumulator 20. That is, there is a delay of $\triangle t1 + \triangle t2$ from the time of beginning of current application to the time of fuel injection. The correction for the delay will be described later. When the current according to Fig. 4 (A) becomes zero, the pressure in the accumulator recovers as shown in Fig. 4 (C), and when it has reached P1 again the needle 26 is closed.

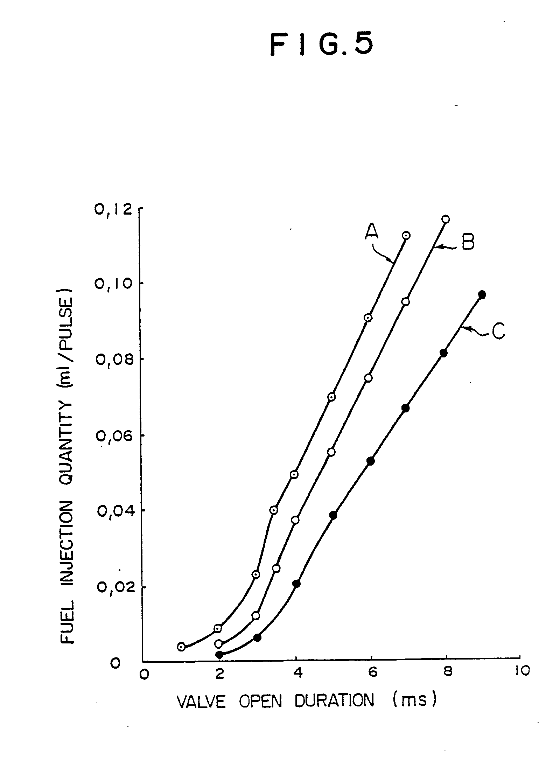

Fig. 5 shows results of measurements concerning the relation between the valve open duration according to a signal instruction and the effective fuel injection quantity. Since any desired slope of the characteristic according Fig. 5 can be obtained by selecting the diameter of the fixed orifice 29, any requirement for the performance of the engine, for example high speed, high output, or the like, can be met; Fig. 5 shows the characteristic for the smallest orifice diameter (A), the largest one (C) and an intermediate diameter (B). The reason why the fuel injection quantity increases with decreasing diameter of the orifice is that the delay of the valve open duration becomes smaller while the delay of valve closure becomes larger. Since it is possible to obtain maximum fuel injection quantities of 0,1 m1/pulse or more, it is possible to employ alternative fuels such as alcohol or the like which are low in calorific power and require a larger fuel injection quantity. Further, since such a fuel injection quantity can be attained within 6 ms, revolution speeds of about 5000 $min_{-1}$ can be achieved.

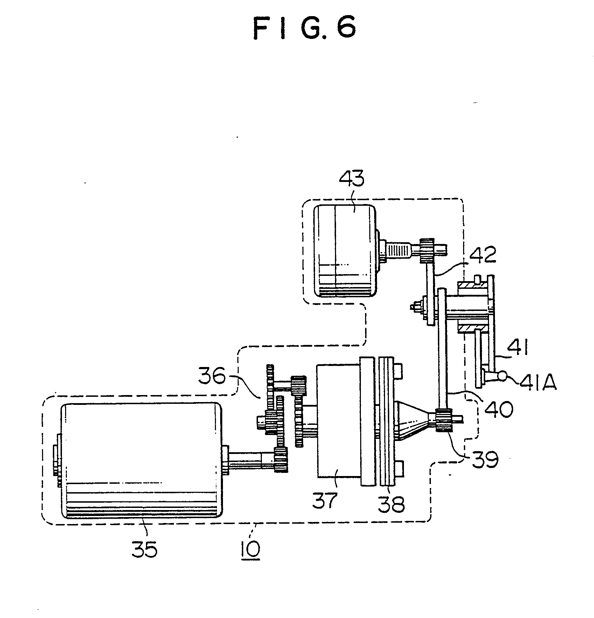

Fig. 6 shows the configuration of the throttle valve actuator 10. It comprises a reversible servo-motor 35, and the rotation of the servo-motor 35 is transmitted to a rotor 37 after a proper speed reduction by means of a gear mechanism 36. Then the rotation is transmitted to a pinion 39 through an electromagnetic clutch 38 which actuates a sector gear 40 to rotate a throttle drive plate 41 and to thereby pull a wire attached to a pin 41A which actuates the throttle valve 9. The rotation is transmitted through a sector gear 42 to a potentiometer 43 to detect the opening angle of the throttle valve 9. The electromagnetic clutch 38 is provided for safety purposes and is operated such that in case the engine rotational speed rises abnormally, the clutch is deenergized to close the throttle valve 9 so as to inhibit the intake of air. The potentiometer serves to detect the fully opened/closed position of the throttle valve 9 and produces a signal so as to stop the revolution of the servomotor 35 when the fully opened/closed position of the throttle valve has been reached.

In this embodiment, the position of the accelerator pedal actuated by the driver is detected by a potentiometer representing the accelerator pedal angle sensor 1. The respective position signal is then stored in the RAM 57 of the microcomputer 2 through the A/D converter circuit 64. The rotational speed calculated by the angle signal converter circuit 65 on the basis of the period of the pulse signal from the crank angle sensor 3 is also stored in the RAM 57. On the basis of these data and by using a map stored in the ROM 56 of the microcomputer 2, the desired fuel quantity, that is the desired valve open duration of the fuel injector 4 attached directly to the combustion chamber, is determined and produced.

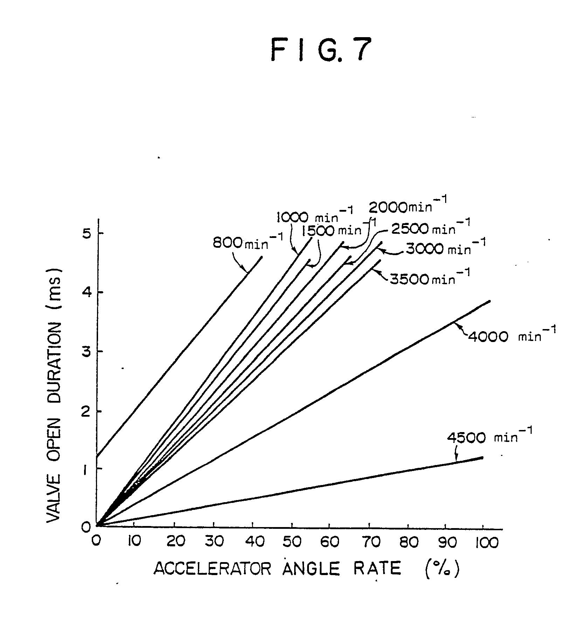

Fig. 7 shows characteristic curves corresponding to a map stored in the ROM 56 of the microcomputer 2 used for determining the desired fuel injection quantity, that is the desired valve open duration, of the fuel injector 4, in accordance with the accelerator pedal position and the actual rotational speed, whereby the characteristic of the fuel injector as shown in Fig. 5 is taken into consideration. If, for example, the accelerator pedal angle rate is 50%, and the engine speed is 4000 $min_{-1}$, a desired valve open duration of the fuel injector 4 of about 1,9 ms may be taken from the corresponding characteristic curve for 4000 $min_{x1}$ in Fig. 7.

Since the signals from the cooling water temperature sensor 5 and the $O_2$ sensor 6 are fed to the microcomputer 2 through the A/D converter circuit 64, a closed-loop control can be performed on the basis of the output of the $O_2$ sensor 6 so as to correct the valve open duration of the fuel injector 4 such that the air-fuel ratio is shifted to a rich mixture during starting of the engine. The fuel is supplied to the fuel injector 4 from the fuel tank 7 through the high pressure pump 8.

The system is provided with the throttle valve actuator 10 for the throttle valve 9 and an air flow meter of the hot wire type 11 for detecting the quantity of intake air, for controlling the intake air quantity on the basis of the valve open duration of the injector 4 and the engine rotational speed by using the map stored in the ROM 56 of the microcomputer 2 such that the composition of the airfuel mixture in the combustion chamber is controlled to shift the λ −value (excess air factor) to a value > 1, for example to λ = 1,2, corresponding to a leaner mixture.

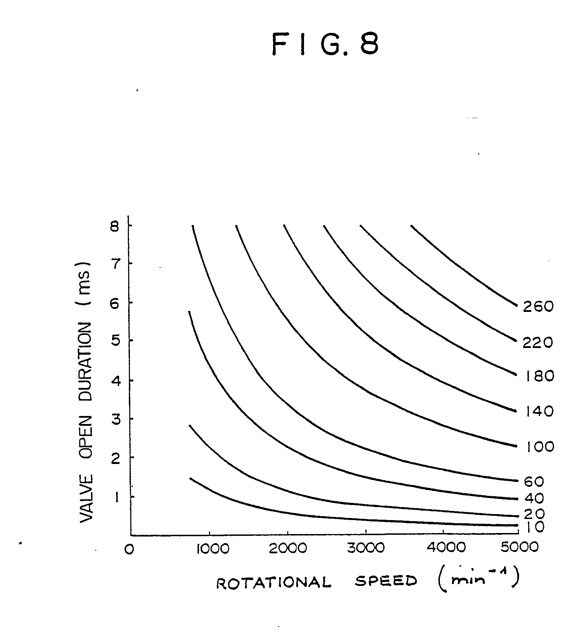

Fig. 8 is a representation of the content of the map for determining the desired valve open duration, that is the desired quantity of air to be sucked into the engine, on the basis of the fuel injection quantity and the rotational speed. Here, the ratio of the injected fuel quantity to the intake air quantity is set such that λ = 1,2 so that the airfuel ratio is shifted to the lean side. Accordingly, for example, if the valve open duration is determined to be 4 ms from Fig. 7 on the basis of the accelerator pedal angle at an engine speed of 2000 min_1, the desired intake air quantity is obtained to be about 70 kg/h from the map values of Fig. 8. The MPU 55 performs the closed-loop control to cause the throttle valve actuator 10 to operate the throttle valve 9 on the basis of the output of the air flow meter 11 such that the obtained desired quantity of air is sucked into the engine.

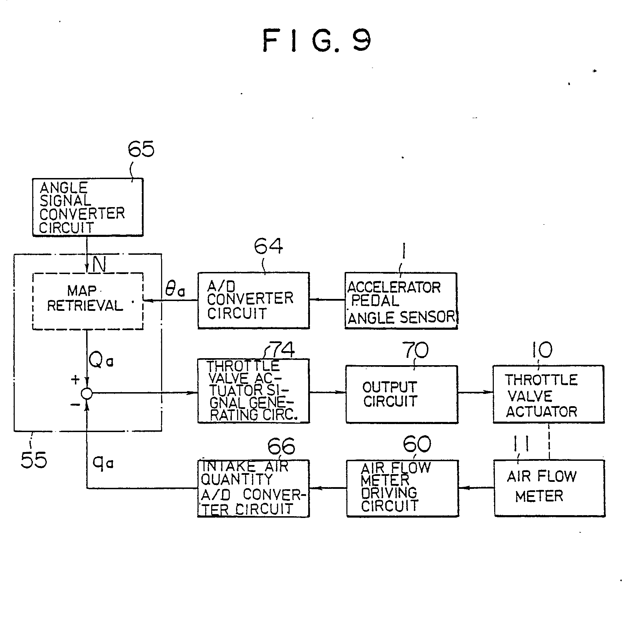

Fig. 9 is a block diagram of the system for closed-loop controlling the throttle valve actuator 10 so as to make the intake air quantity coincident with the desired map value obtained from Fig. 8. The instruction signal detected by the accelerator pedal angle sensor 1 is converted into a digital accelerator pedal angle signal ∂a by the A/D converter circuit 64 and supplied to the MPU 55. On the other hand, the engine rotational speed N is supplied to the MPU 55 from the angle signal converter circuit 65. The MPU 55 performs retrieval from the map according to Fig. 8 so as to determine the desired intake air quantity Qa on the basis of the accelerator pedal position and the engine rotational speed N. On the other hand, the actual intake air quantity qa detected by the air flow meter 11 and the air flow meter driving circuit 60 is fed back to the MPU 55 through the intake air quantity converter circuit 66. The MPU 55 compares the intake air quantity Qa obtained through map retrieval with the detected actual intake air quantity qa so as to obtain the difference therebetween. On the basis of the difference signal issued by the MPU 55, the throttle valve actuator signal generating circuit 74 produces a control signal to operate the throttle valve actuator 10 through the output circuit 70. As the result of this, the throttle valve 9 is rotated to control the actual intake air quantity such that it approaches to the value Qa retrieved from the map. The thus controlled actual intake air quantity is detected by the air flow meter 11. Accordingly, the intake air quantity is closed-loop controlled in this manner.

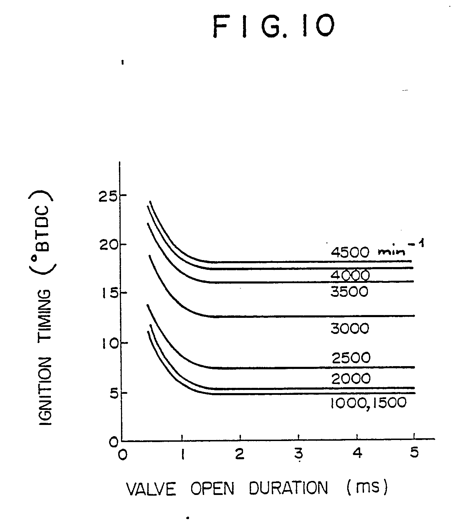

The desired ignition timing of the ignition plugs 14 is determined on the basis of the valve open duration of the fuel injector and the engine rotational speed and supplied to the ignition plugs 14 through the ignition coil 15 controlled by the microcomputer 2. Fig. 10 shows curves corresponding to a map stored in the ROM 56 for determining the ignition timing on the basis of the valve open duration and the engine speed. In Fig. 10, the ignition timing is expressed in degrees BTDC (degrees of advance angle before top dead center).

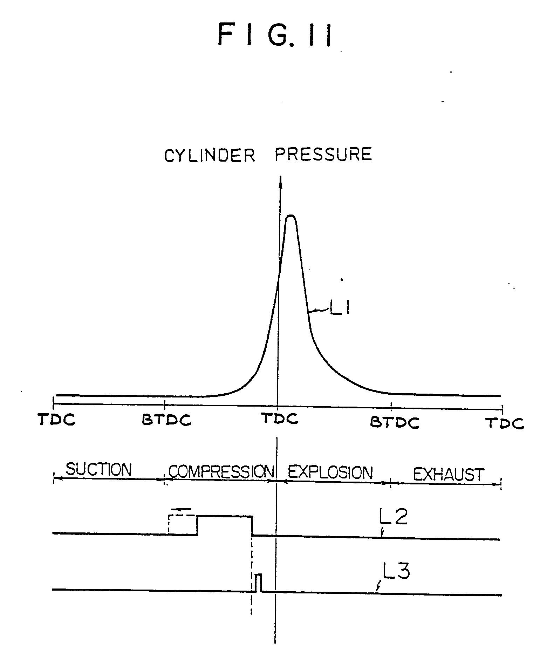

Fig. 11 is a diagram for explaining the control of injection timing and ignition timing. In the drawing, curve L1 shows the change of the pressure in the cylinder in dependence of the crank angle, diagram L2 shows the open/close timing of the injection valve, and diagram L3 shows the ignition timing. As may be seen from the drawing, ignition is performed after the injector has been closed so as to attain a uniform fuel-air mixture in the cylinder and to reduce the load applied to the injector. If ignition and explosion occur during fuel injection, the injection valve is subject to a high explosion pressure and a corresponding load in its open state. Further, when the fuel injection quantity is to be increased, it is performed by extending the valve open initiation timing to the intake stroke side. That is, only the valve open initiation timing is shifted without changing the valve open dermination timing for increasing the fuel injection quantity. The valve open initiation timing may occur in the intake stroke.

The injection initiation time from which fuel is injected from the fuel injector 4 is determined and outputted on the basis of the valve open duration of the injector 4, that is the fuel quantity, by using the map stored in the ROM 56 of the microcomputer 2.

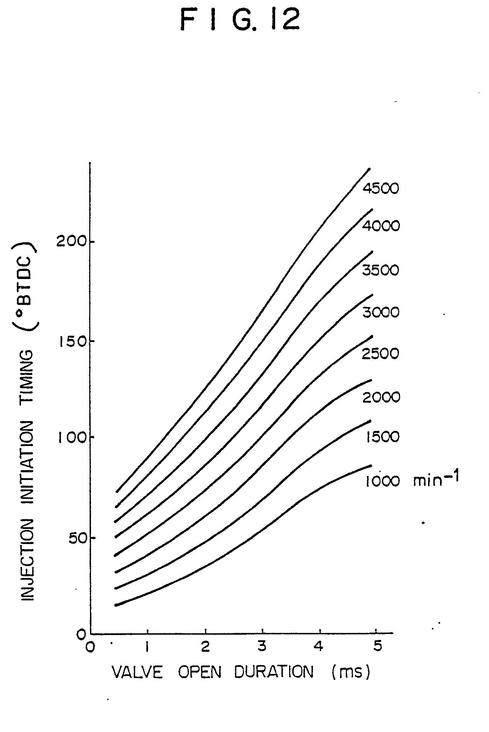

Fig. 12 shows curves corresponding to a map based on what has been explained with respect to Fig. 11 which is used for determining the fuel injection initiation timing on the basis of the valve open duration and the engine speed. The fuel injection initiation timing is set such that the injection ends before ignition begins.

In order to compensate for the response delay of the injector 4 or the like as explained with respect to Fig. 4, the actual fuel injection initiation timing is detected by the piezo type fuel pressure sensor 13 provided in the fuel line 12 immediately before the injector 4 (see Figs. 1 and 3) and fed to the microcomputer 2 from the fuel pressure signal A/D converter circuit 67 (Fig. 2).

In the following, it is assumed that the fuel pressure sensor 13 for detecting the injection timing is attached to the injector 4 as shown in Fig. 3. If the needle 26 is lifted, fuel is injected, and the pressure in the reserve well 18 is reduced, resulting in a reduction of the fuel pressure in the pressure chamber 34. The reduction of fuel pressure in the pressure chamber 34 is detected by the fuel pressure sensor 13 so as to detect the actual fuel injection initiation timing. The thus detected actual fuel injection initiation timing is compared with the desired fuel injection initiation timing retrieved from the map corresponding to Fig. 12 so as to perform the closed-loop control of the current supply initiation timing of the coil 32 of the injector 4 such that both the actual and the desired fuel injection initiation timings are made to be coincident with each other. By this kind of control, the response delay of $\triangle t1 + \triangle t2$ as shown in Fig. 4 can be automatically compensated.

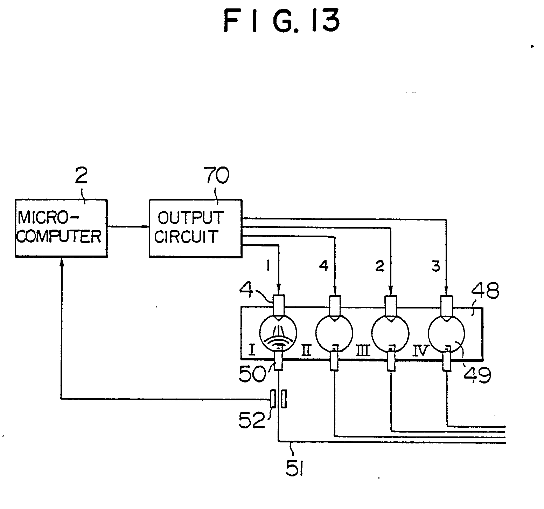

Fig. 13 shows the determination of the cylinder into which fuel is to be injected. Fig. 13 is based on an engine 48 having four cylinders 49 (I to IV). In this system, in order to perform air-fuel ratio control for the respective cylinders 49 of the engine 48, it is necessary to judge into which one of the cylinders the last determined desired fuel quantity is to be injected. To this end, a magnetic pickup 52 is attached to the high tention cord 51 connected to the ignition plug 50 for cylinder I, and the output signal of the magnetic pickup 52 is used for cylinder judgement. The MPU 55 successively produces output signals on the basis of the output signal of the magnetic pickup 52 for successively determining the four injection periods for the four fuel injectors 4 corresponding to 720/4 degrees of engine crank shaft revolution. On the basis of the output signals, the fuel injection timing signal generating circuit 72 successively applies fuel injection signals to the respective injectors 4 through the output circuit 70. The numerals 1, 2, 3 and 4 designate the order of injection which corresponds to the order of ignition of the respective ignition plugs 50.

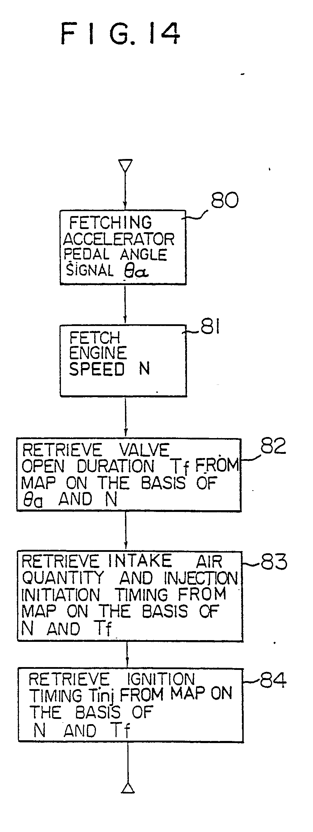

Fig. 14 is a flowchart showing the operation of the fuel and ignition systems. In step 80, the accelerator pedal angle signal $\partial a$ corresponding to the angular position of the accelerator pedal actuated by the driver and detected by the accelerator pedal 1 is fetched. In the next step 81, the engine rotational speed N is fetched. In step 82, the valve open duration (that is the fuel injection quantity) Tf of the injector 4 is determined through retrieval from the map according to Fig. 7 on the basis of the accelerator pedal angle signal $\partial a$ of step 80 and the engine speed N of step 81, and in step 83, the intake air quantity Qa and the injection initiation timing Tf are determined through retrieval from the map according to Figs. 8 and 12 on the basis of the valve open duration Tf and the engine rotational speed N. In the next step 84, the ignition timing Tinj is determined by means of the map according to Fig. 10 on the basis of the engine speed N and the valve open duration Tf.

As described above, according to this embodiment, the fuel injection quantity, the fuel injection initiation timing and the ignition timing for each combustion chamber are controlled by means of the microcomputer 2. Further, in order to attain lean air-fuel mixtures, the throttle valve 9, the throttle valve actuator 10 and the air flow meter 11 are provided for closed-loop control of the intake air quantity.

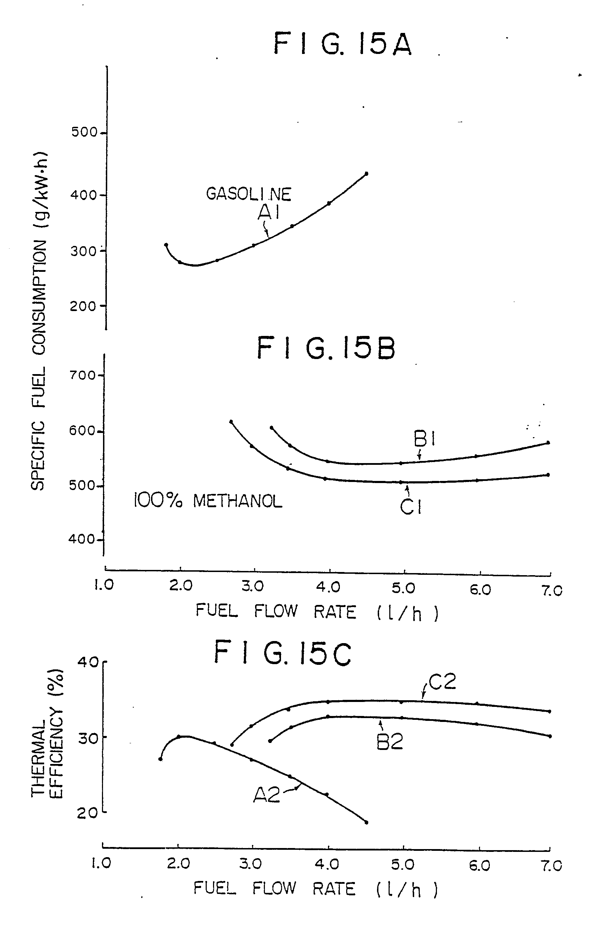

Figs. 15A, 15B and 15C show results of comparison between the performance of a conventional gasoline engine provided with a carburetor and that of an engine provided with the system according to this embodiment employing 100% methanol. The remarkable difference between the specific fuel consumption characteristic A1 of the conventional carburetor type engine (a) and the specific fuel consumption characteristics B1 and C1 obtained with the system according to this invention is due to the difference in calorific power of fuel. The system of the present embodiment is advantageous in that since fuel injection can be performed when the pressure has become high because of direct cylinder injection, the compression ratio can be increased, while in the conventional carburetor engine spontaneous ignition may occur when the pressure becomes high. Characteristic B1 in Fig. 15B corresponds to a compression ratio of 8,0 which is the same value as that of the conventional carburetor type engine, while characteristic C1 corresponds to a compression ratio of 10,0. The above-mentioned difference in the calorific power is avoided if the specific fuel consumption is converted into thermal efficiency as shown in Fig. 15C, wherein the thermal efficiency characteristics A2, B2 and C2 corresponding to the specific fuel consumption characteristics A1, B1 and C1 can be directly compared on the same graph.

As may be seen from the characteristics A1 and A2 relating to carburetor type engines, the lowest specific fuel combustion may be only within a narrow fuel flow rate region of about 2,0 to 2,5 l/h, and the highest thermal efficiency may be about 30% at best. On the other hand, the system of the embodiment according to the invention is advantageous in that since control is made so as to maintain the condition $\lambda$ 1,2 in a wide range of fuel flow rates, the lowest specific fuel consumption can be obtained in a wide range of the fuel flow rate (about 3,5 to 7,0 l/h). Further, the highest thermal efficiency may be about 33% at a compression ratio of 8,0 and about 35% at a compression ratio of 10,0, so that the specific fuel consumption can be improved by about 10 to 20% in comparison with carburetor engines.

In Fig. 1, the dotted line indicates the case where a cylinder pressure sensor 54 for detecting the combustion pressure in the cylinder is provided in the ignition plug 14. The output signal of the cylinder pressure sensor 54 is supplied to the microcomputer 2 and used for correcting the injection timing.

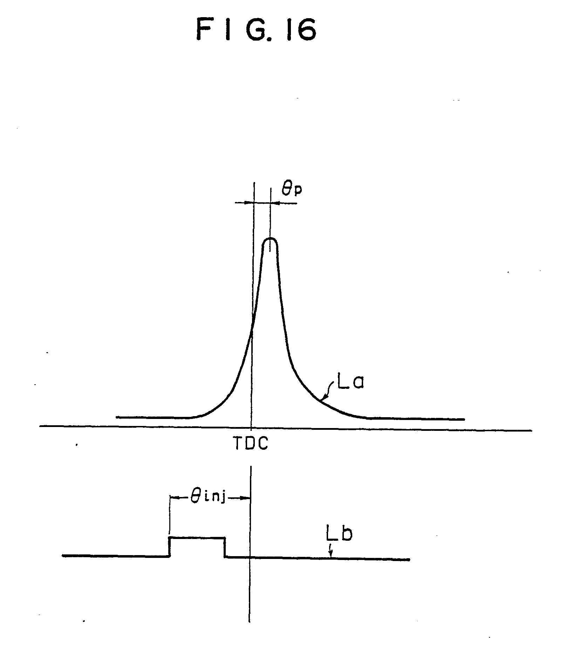

Fig. 16 shows the principle of the above-mentioned correction of ignition timing, in which the curve La designates the change of the pressure in the cylinder, and diagram Lb indicates the injection timing. By means of the cylinder pressure sensor 54, the peak position of combustion pressure is expressed in degrees of the retard angle $\partial p$ from TDC (ATDC). With consideration of the physical efficiency of the engine, it is optimal to select the peak position to be $\partial p$ 15 to 20° ATDC. That is, since the peak position may shift depending on the injection initiation timing $\partial inj$, the injection initiation timing $\partial inj$ is compensated such that $\partial p$ 15 to 20°, thereby attaining an improvement of engine efficiency.

Thus, according to the above embodiment, lean combustion control for each combustion chamber can be achieved to thereby improve the thermal efficiency by 10% in comparison with the conventional carburetor engines for the same compression ratio (8,0).

Further, according to this embodiment, if the compression ratio is increased to 10,0 which is most advantageous with injection directly into the cylinder, the thermal efficiency can be improved by about 20% in comparison with conventional carburetor type engines.

Further, according to this embodiment, various kinds of fuel can be employed because of the provision of an injection valve in which the fuel flow rate characteristic can be freely changed in a wide range.

As discussed above, according to the present invention, it is made possible to attain lean combustion to thereby extremely improve the fuel economy.

Another embodiment according to the present invention will be described hereunder. In the above described first embodiment, the injection timing by the injector is set in the later range of compression stroke (25 to 45° BTDC) in order to attain stratified charge. Accordingly, it is required to inject fuel into the combustion chamber with high compression pressure, and therefore, a high pressure type fuel injector (25 to 100 kg/cm²) is to be employed for such cylinder direct injection engines. This, however, involves the problem that the electric fuel injection control cannot be easily performed, and it is a little difficult to realize a reduction of fuel costs.

According to this second embodiment, the fuel discharge by the fuel injector and the injection of the discharged fuel toward the ignition plug can be separately performed at different timings. Accordingly, the fuel injection from the fuel injection valve can be performed at the timing in the intake stroke or in the beginning of the compression stroke at which the pressure in the cylinder is substantially equal to the atmospheric pressure, and after a predetermined period of time has elapsed, the fuel held in a fuel holding portion of the fuel injector is atomized by vibration by means of an ultrasonic vibration element so that the atomized fuel is injected toward the ignition plug in the combustion chamber so as to be ignited by the ignition plug; in this manner, a stratified charge can be attained.

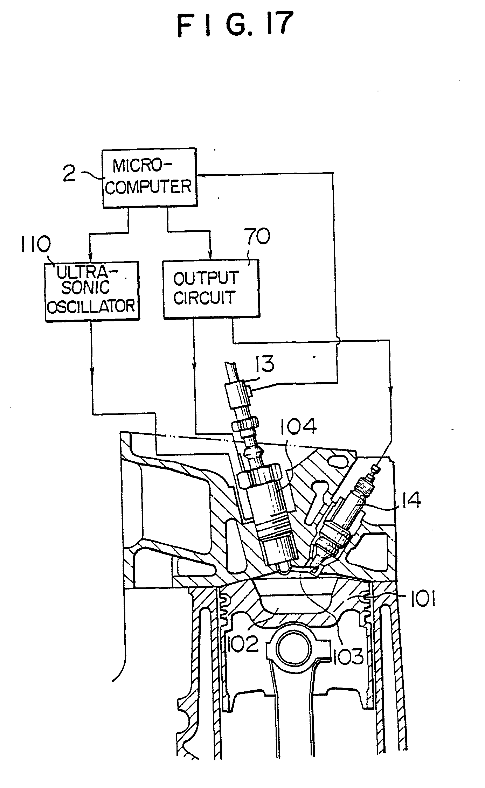

This embodiment of the invention will be described with more details with reference to Figs. 17 et seq.

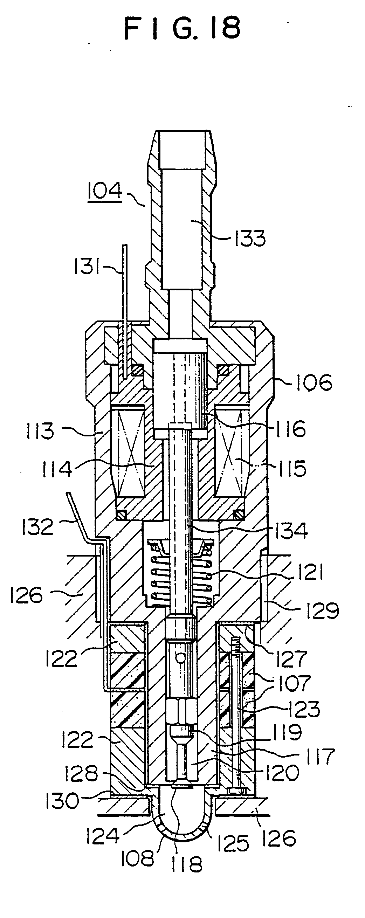

Fig. 17 is a cross-section illustrating the configuration of the cylinder injection type engine according to the second embodiment. As shown in the drawing, a cavity 102 is formed at the head portion of the piston 101. Further, a fuel injector 104 and an ignition plug 14 are provided in the combustion chamber 103. In this embodiment, as shown in Fig. 18, the fuel injector 104 comprises a fuel injection valve 106 and an ultrasonic vibration element 107, and a dome-like fuel holding portion 108 which serves for temporarily holding the injected fuel at the injection end of the fuel injection valve 106. Further, the system comprises an output circuit 70 (Fig. 17) connected to the fuel injection valve 106 (Fig. 18) for driving the injection valve, and an ultrasonic oscillator 110 connected to the ultrasonic vibration element 107. The output circuit 70 further transmits an ignition signal to the ignition plug 14. The output circuit 70 and the ultrasonic oscillator 110 are connected to the microcomputer 2 by which the injection valve 106 and the vibration element 107 are actuated in the calculated or mapped timing so that the fuel can be ignited in a proper timing.

The fuel pressure sensor 13 shown in Fig. 17 operates in the same manner as that of Figs. 1 and 3.

The particular structure of the fuel injector 104 is shown in Fig. 18. The fuel injection valve 106 constituting the fuel injector 104 is a low pressure type electromagnetic valve provided, within a casing 113, with an electromagnetic coil 115 wound on a yoke 114 and a plunger 116 actuated by the coil 115. A small size nozzle portion 117 is provided at the front end of the casing 113, and a poppet type valve body 118 is provided at the front end of the nozzle portion 117. The valve body 118 is coupled with the plunger 116 through a needle 119 so as to perform open/close operation depending on the reciprocating movement of the plunger 116. As shown in the drawing, the valve body 118 projects from the front end of the nozzle portion 117 so as to allow to discharge fuel out of a fuel chamber 120 formed in the nozzle portion 117 when the plunger 116 is moved downward. The valve body 118 is normally in its closed state by means of the needle 119 which is urged upward by a spring 121. Further, the supply of fuel into the fuel chamber 120 is performed through a fuel inlet 133 formed at the top portion of the casing 113 and a fuel path 134 formed in the axially central portion of the plunger 116 and the needle 119.

In the outer periphery of the nozzle portion 117 of the fuel injection valve 106, the above-mentioned ultrasonic vibration element 107 is provided. The vibration element 107 is positioned with a predetermined gap between it and the nozzle portion 117 and supported by upper and lower pressing members 122 placed at its upper and lower ends. That is, the vibration element 107 is fixed by a bolt 123 which extends from the lower pressing member 122 through the vibration element 107 and is screwed at its upper end into the upper pressing member 122. A fuel holding portion 108 forms an integral part of the lower pressing member 122 such that it covers the front end of the nozzle portion 117. Thus, the fuel injected from the fuel injection valve 106 is temporarily held in the cavity 124 of the fuel holding portion 108. Injection holes 125 are formed in the mask 108, in the number corresponding to the ignition plugs 14. The injection holes 125 are directed toward the ignition plugs 14 (in case two ignition plugs are provided in each combustion chamber), in the combustion chambers 103.

The fuel injector 104 constituted by the fuel injection valve 106 and the ultrasonic vibration element 107 is attached to the engine body 126. On the outer periphery of the nozzle portion 117 of the injection valve 106, the upper pressing member 122 supporting the vibration element 107 is made abutting against a shoulder portion between the casing 113 and the nozzle portion 117 through an antivibration material 127. The nozzle portion 117 abuts at its front end surface against the inner wall surface of the fuel holding portion 108 through a seal member 128. The injector 104 is inserted into the engine body 126 with the fuel holding portion 108 placed at its forward end and directed to the combustion chamber 103, and fixed to the engine body 126 through a threaded portion 129 formed in the outer periphery of the casing 113. The injector 104 is attached such that only the fuel holding portion 108 projects into the combustion. chamber 103, and a seal member 130 is provided between the front end surface of the lower pressing member 122 and the engine body 126 so as to seal the combustion chamber 103.

The input terminal 131 of the electromagnetic coil 115 of the fuel injector 104 and another terminal 132 connected to the ultrasonic vibration element 107 are led out of the injector 104 and connected to the above-mentioned output circuit 70 and the ultrasonic oscillator 110, respectively.

This cylinder fuel supply system is operated in the following manner. The fuel supplied into the fuel injection valve 106 from the fuel inlet 133 is led to the fuel chamber 120 through the fuel path 134 formed in the plunger 116 and in the needle 119. Upon application of a valve open signal to the input terminal 131 from the output circuit 70, the plunger 116 is moved downward by means of the coil 115 so that the valve body 118 is also moved downward together with the needle 119 to thereby open the valve. Thus, the fuel in the fuel chamber 120 is discharged and temporarily held in the cavity 124 of the fuel holding portion 108. Thereafter, upon reception of a valve close signal, the plunger 116 is moved upward by means of the spring 121 to thereby close the valve. Thus, the fuel measured in correspondence with the valve open duration is temporarily held in the cavity 124 of the fuel holding portion 108.

After a predetermined period of time has elapsed from the time at which the fuel had been injected into the cavity 124, an output signal is applied to the terminal 132 so that the ultrasonic vibration element 107 is vibrated. The seal members 128 and 130 are situated at the positions of vibration nodes; accordingly, when the vibration element 107 vibrates, the forward end of the fuel holding portion 108 which represents a free end, may vibrate violently. Due to this vibration the fuel held in the cavity 124 is atomized and discharged out of the injection hole 125. Since the injection hole 125 is directed toward the ignition plug 14, the thus discharged atomized fuel is concentrated in the vicinity of the ignition plug 14.

Then, when an ignition signal is produced from the output circuit 70, the fuel is ignited by the ignition plug 14.

Thus, in cylinder direct injection type engines, the discharge of measured fuel into the combustion chamber 103 and the injection of the thus discharged and atomized fuel toward the ignition plug 14 are performed separately, whereby the fuel is atomized by the action of the ultrasonic vibration element 107, so that a combustible air-fuel mixture is concentrated in the vicinity of the ignition plug 14; in cooperation with the effect of the cavity 102 of the piston 101 a stratified charge is obtained which makes it possible to achieve lean combustion with a lean total air-fuel ratio.

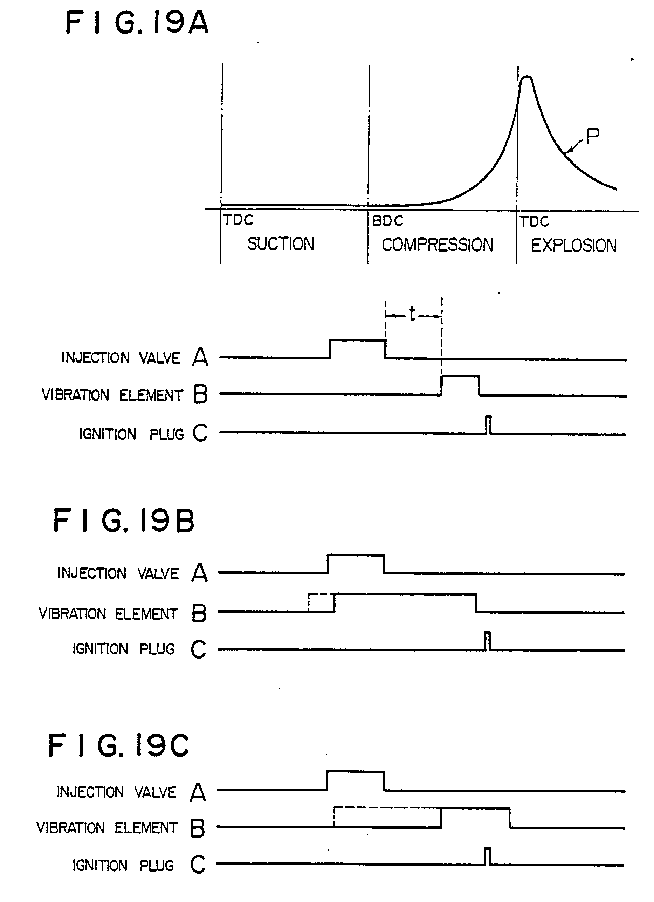

The timing of operation of the fuel injection valve 106 and the ultrasonic vibration element 107 will be now described with reference to Fig. 19A which shows the change of the pressure P in the combustion chamber 103 of the cylinder, the operation timing A of the fuel injection valve 106, the operation timing B of the ultrasonic vibration element 107 and the operation timing C of the ignition plug 14. As shown in Fig. 19A, the injection valve 106 is opened in the suction stroke or in the beginning of the compression stroke so as to inject the fuel into the cavity 124 of the fuel holding portion 108. After a predetermined period of time t has elapsed, the vibration element 107 is caused to vibrate and to supply the atomized fuel into the combustion chamber 103, and then the vibration is stopped. The thus supplied fuel is then ignited by the ignition plug 14. Thus, the injection valve 106 injects fuel in the air intake stroke or in the beginning of the compression stroke in which the pressure P in the cylinder is near or equal to the atmospheric pressure to make unnecessary any injection device of high pressure type so as to make it possible to perform injection at a low pressure (for example 2 to 3 kg/cm²). In this case, since the valve body 118 of the fuel injection valve 106 is of poppet type, the valve is not opened even if combustion pressure is exerted onto the forward end of the needle 119 in the compression or explosion stroke, in contrast to a pintle type valve, thereby making it possible in an optimal manner to use low pressure valves for injecting fuel directly into the cylinders.

As described above, according to this embodiment, a low pressure type fuel injection valve 106 is used together with the ultrasonic vibration element 107, and the atomized fuel is injected toward the ignition plug 14, so that stratified charge can be attained. This concept leads to a remarkable reduction of the costs of the fuel supply system, allows a complete electronical control of the cylinder fuel supply system and reduces the costs of the electronical control system.

Figs. 19B to 19C show other embodiments in which the operation timing of the ultrasonic vibration element 107 is changed. Fig. 19B illustrates the case where the vibration element 107 is caused to begin to vibrate in or prior to the valve open duration of the injection valve 106, and ignition is perfomed after the vibration is stopped. Fig. 19B shows, on the other hand, the case where the vibration element 107 is caused to begin to vibrate in or after the valve open duration of the injection valve 106, and the vibration is stopped after the ignition has been performed. In this case, the ignition process and the initial combustion can be accelerated owing to the combustion accelerating characteristic due to the fuel atomization by ultrasonic vibration.

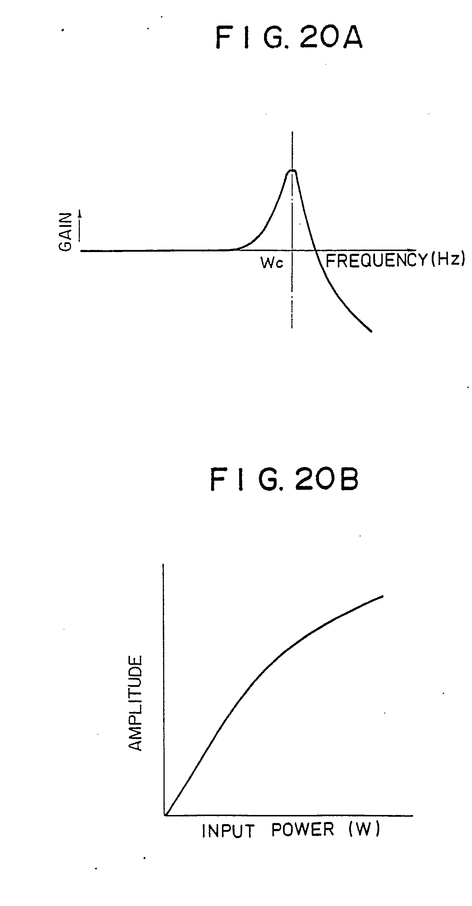

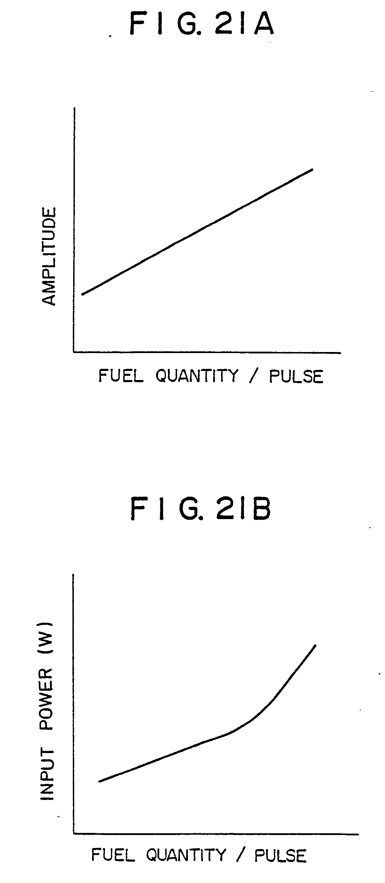

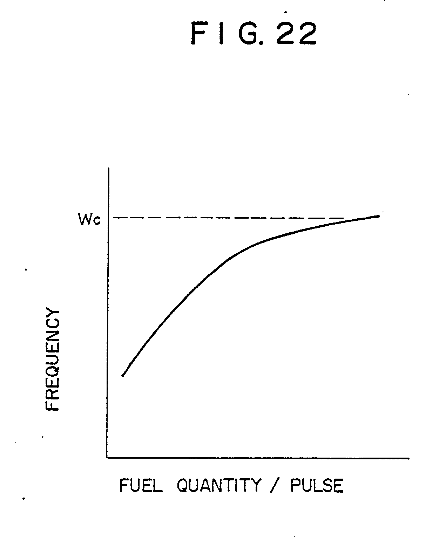

The control of the ultrasonic vibration element 107 is performed in the following manner. Figs. 20A and 20B show the frequency characteristic and the amplitude characteristic, respectively, of the ultrasonic vibration element 107. At a certain frequency Wc (resonance frequency), the gain as well as the fuel atomization effect of the vibration element 107 become maximum. Accordingly, this resonance frequency Wc is used in this embodiment. Further, since the amplitude changes depending on the input power as shown in Fig. 20B, the atomization ability and the spray characteristic can be controlled by changing the amplitude via the input power in this present embodiment when the fuel quantity changes. The input power is controlled by changing the current supplied to the ultrasonic oscillator 110. Particularly, it is desirable to make linear the relation between the fuel quantity to be injected and the desired amplitude of the vibration element 107 linear in view of the processing ability and the spray characteristic, as is shown in Fig. 21A. Accordingly, the control is performed such that the input power, that is the current value, is changed with respect to the fuel quantity in accordance with the characteristic of Fig. 21B. Alternatively, as shown in Fig. 22, the control can be performed such that the frequency is adjusted to be the resonance frequency Wc at maximum fuel quantity, without applying input power control.

Further, it is also possible to maintain constant the frequency and/or the amplitude independently of the respective fuel quantity.

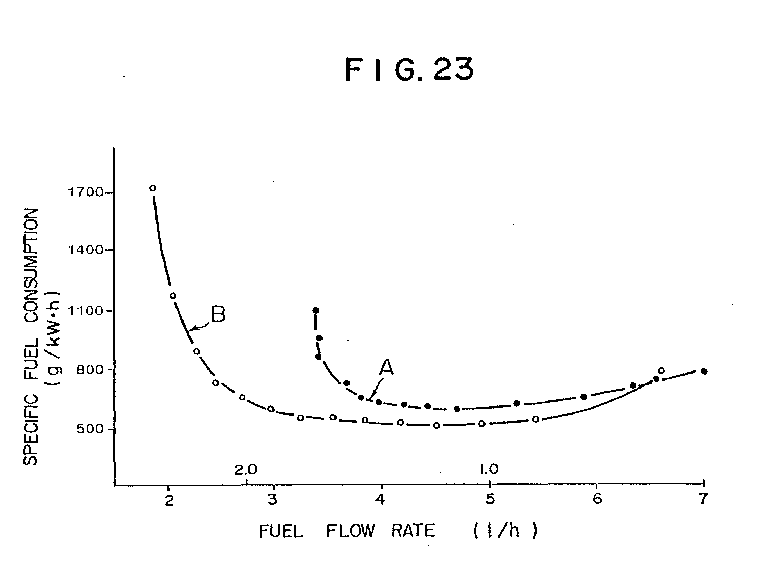

Fig. 23 shows results of experiments in which the specific fuel comsumption was determined in dependence of the fuel flow rate using the cylinder fuel supply system as described above. In the experiments, 100% methanol was used as fuel. Curve A shows the characteristic obtained when fuel was injected and ignited in the latter period of the compression stroke by using a high pressure type injector, while curve B illustrates the characteristic of the specific fuel consumption obtained with the system of the present embodiment. As is apparent form Fig. 23, lean combustion as well as a remarkable reduction of specific fuel consumption can be attained owing to the atomization by the ultrasonic vibration element 107 and the control of spray characteristic.

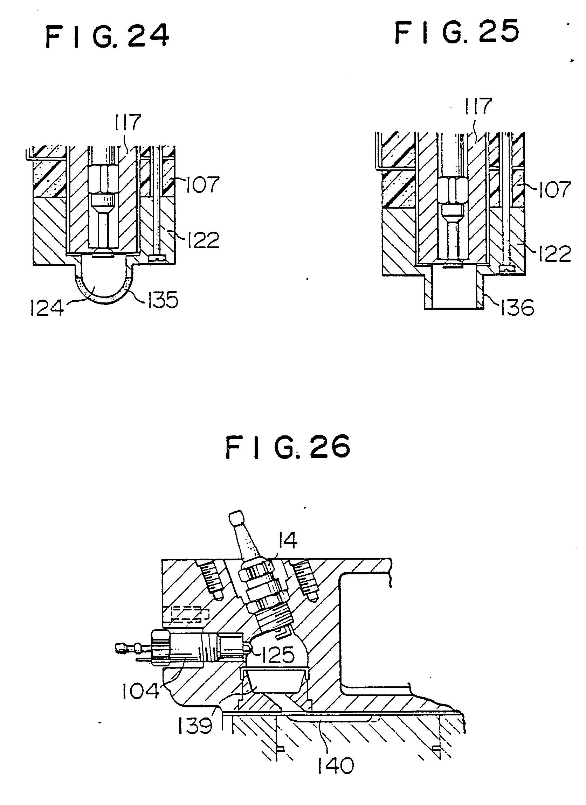

Next, modifications of the fuel holding portion 108 of the injector 106 according to this embodiment will be described. Fig. 24 shows one of the modifications in which the dome-shaped fuel holding portion 135 provided on the lower pressing member 122 is made of a porous material without forming injection holes 125. In this embodiment, the injected fuel is held in the cavity 124 and within the pores of the porous material of the fuel holding portion 135, and thereafter the stored fuel is atomized and scattered in the combustion chamber 103 by means of vibration by the ultrasonic vibration element 107.

Fig. 25 shows another modification in which the fuel holding portion 136 is constituted by a cylinder. In this embodiment, the injected fuel strikes against the inner wall of the cylinder, whereby fuel is reflected within the cylinder, so that the fuel may be held therein for the period of repetition of this striking/reflecting operation. After this period has elapsed, the fuel is atomized and scattered from the forward end of the fuel holding portion 136 into the combustion chamber 103.

Fig. 26 illustrates a further embodiment of the fuel injection system applied to an engine provided with an auxiliary combustion chamber 139, the above-mentioned fuel injector 104 and an ignition plug 14 attached in the auxiliary combustion chamber 139. In this case, the injection hole 125 of the fuel holding portion 108 is directed toward the main combustion chamber 140. In this embodiment, when air flows into the auxiliary combustion chamber 139 in the compression stroke, the injected fuel spray is conveyed by this air flow toward the ignition plug 14 and ignited thereat.

As described above, this embodiment of the present invention is advantageous in that the pressure in the fuel supply system can be reduced, and fuel can be atomized by means of the ultrasonic vibration element with control of the spray characteristic; therefore, a complete electronic control of fuel quantity can be easily attained, whereby a reduction of specific fuel consumption by 10 to 15% and stratified charge with lean fuel can be achieved.

**Claims**

1. An electronically controlled fuel supply system for injection type internal combustion engines having a plurality of combustion chambers each provided with a fuel injector (4; 104), an intake air path supplying air to the combustion chambers and an exhaust path discharging the exhaust gas from the combustion chambers,
   comprising
   - a throttle valve actuator (10) actuating the throttle valve (9) provided in the intake air path,
   - speed detecting means (3; 55) detecting the rotational speed (N) of the engine,
   - instructing means (1) (e.g. accelerator pedal) instructing the operation of the engine,
   - fuel injection initiation and ignition timing determining means (55, 56, 72, 73) determining the valve open duration of the fuel injector (4; 104) on the basis of an instruction signal from the instructing means (1) and the rotational speed (N) by retrieving the corresponding value of the valve open duration out of a previously stored memory (56) and determining the fuel injection initiation timing and the ignition timing,

- air quantity determining means (55, 56) determining the air quantity to be sucked into the intake air path on the basis of the rotational speed and the valve open duration determined by the fuel injection initiation and ignition timing determining means (55, 56, 72, 73), and

- controlling means (10; 60, 66, 70, 74) closed-loop controlling the intake air quantity via the throttle valve actuator (10) such that the intake air quantity (qa) detected by an air flow meter (11) coincides with the intake air quantity (Qa) determined by the air quantity determining means (55, 56), characterized in that the fuel injection initiation and ignition timing determining means (55, 56, 72, 73) determine the valve open duration by retrieving corresponding values out of a map previously stored in the memory (56) and the fuel injection initiation timing in accordance with the rotational speed (N) of the engine and the corresponding valve open duration such that the valve open duration is terminated before the ignition time is reached.

2. The system according to claim 1, wherein the fuel injectors (4; 104) comprise injection timing detecting means (13) detecting the time of initiation of fuel injection and correction means (55, 56, 67, 72) correcting the injection initiation timing of the fuel injectors (4; 104) such that the fuel injection initiation timing detected by the injection timing detecting means (13) coincides with the fuel injection initiation timing determined by the injection/ignition determining means (55, 56, 72, 73; Fig. 14).

3. The system according to claim 1 or 2, wherein the injection timing detecting means comprise fuel pressure detecting means (13) provided in the fuel supply path before the fuel injector (4, 104).

4. The system according to one of claims 1 to 3, wherein the first determining means (55, 56, 72, 73) determine the ignition timing such that the ignition time comes after the valve open duration has elapsed.

5. The system according to one of claims 1 to 4, wherein ignition signal detecting means (52) are provided in the line supplying the ignition signal to the ignition plug of one of the combustion chambers which detect the ignition signal supplied thereto, and a fuel injection timing signal generating circuit (72) applies injection signals successively to the respective fuel injectors (4).

6. The system according to one of claims 1 to 5, wherein the injector (104) comprises a fuel holding portion (108) provided at the fuel injection end for temporarily holding injected fuel therein and vibration means (107, 110) for vibrating the fuel holding portion (108) such that the fuel held therein is atomized and scattered in the combustion chamber.

7. The system according to claim 6, wherein the injector (104) injects fuel into the fuel holding portion (108) before the pressure in the combustion chamber exceeds a predetermined value in each compression stroke and causes the vibration means (107, 110) to vibrate the fuel holding portion (108) to thereby atomize and scatter the atomized fuel into the combustion chamber before the ignition time is reached.

8. The system according to one of claims 1 to 7, wherein the injector (104) includes delay means (107, 108, 135, 136) for scattering the fuel injected during the valve open duration into the combustion chamber (103) with a predetermined delay time from the fuel injection.

9. The system according to one of claims 6 to 8, wherein the fuel holding portion is in the form of a dome having an injection hole formed in opposition to the ignition plug (14).

10. The system according to claim 9, wherein the dome is made of a porous material.

11. The system according to one of claims 6 to 10, wherein the vibration means include a vibration element (107) and an oscillator (110) supplying electric power to the vibration element (107) to cause it to vibrate.

12. The system according to claim 11, wherein the vibration element (107) is an ultrasonic vibration element.

13. The system according to claim 11 or 12, wherein the oscillator (110) produces and applies to the vibration element (107) an output signal having a frequency which is equal to a natural frequency of the vibration element (107).

14. The system according to one of claims 11 to 13, wherein the oscillator (110) changes the amplitude of vibration of the vibration element (107) depending on the valve open duration.

15. The system according to one of claims 8 to 14, wherein the delay means include a cylindrical member provided at the fuel injection end.

16. The system according to one of claims 1 to 15, wherein the fuel injector (104) includes a poppet valve as injection valve.

17. The system according to one of claims 6 to 16, wherein the fuel holding portion (108) is vibrated before the ignition timing is reached.

18. The system according to one of claims 6 to 17, wherein the vibration means (107, 110) cause the fuel holding portion (108) to begin its vibration after the pressure in the combustion chamber (103) exceeds a predetermined value.

19. The system according to claim 18, wherein the vibration means (107, 110) cause the fuel holding portion (108) to end its vibration immediately before ignition.

**Patentansprüche**

1. Elektronisch gesteuertes Kraftstoffversorgungssystem für Einspritz-Brennkraftmaschinen, die eine Mehrzahl von Verbrennungskammern aufweisen, von denen jede mit einer Einspritzdüse (4; 104), mit einem Luft in die Verbrennungskammer zuführenden Ansaugluftweg und mit einem das Abgas aus der Verbrennungskammer abführenden Abgasweg versehen ist, das

- ein Drosselklappenbetätigungselement (10), das die im Ansaugluftweg vorgesehene Drosselklappe (9) betätigt,
- eine Geschwindigkeitsmeßeinrichtung (3; 55), die die Drehzahl (N) des Motors mißt,
- eine Bedienungseinrichtung (1) (z.B. ein Gaspedal), die den Betrieb des Motors steuert,
- den Zeitpunkt des Kraftstoffeinspritzungsbeginns und der Zündung bestimmende Einrichtungen (55, 56, 72, 73), die die Klappenöffnungsdauer der Einspritzdüse (4; 104) auf der Grundlage des Befehlssignales von der Bedienungseinrichtung (1) und der Drehzahl (N) bestimmen, indem sie den entsprechenden Wert für die Klappenöffnungsdauer aus einem im voraus gespeicherten Speicherinhalt (56) wieder auffinden, und die den Zeitpunkt des Beginns der Kraftstoffeinspritzung und den Zündzeitpunkt bestimmen,
- eine Luftmengenmeßeinrichtung (55, 56) die die in den Ansaugluftweg gesaugte Luftmenge auf der Grundlage der Drehzahl und der von den Einrichtungen zur Bestimmung des Zeitpunktes des Kraftstoffeinspritzungsbeginns und der Zündung bestimmten Klappenöffnungsdauer bestimmt, und
- Steuereinrichtungen (10; 60, 66, 70, 74), die die Ansaugluftmenge über das Drosselklappenbetätigungselement (10) durch einen Regelkreis so steuern, daß die von einem Luftdurchfluß-Meßgerät (11) ermittelte Ansaugluftmenge (qa) mit der von der Luftmengenmeßeinrichtung (55, 56) bestimmten Ansaugluftmenge (Qa) übereinstimmt, aufweist, dadurch gekennzeichnet, daß die Einrichtungen (55, 56, 72, 73) für die Bestimmung des Zeitpunktes des Kraftstoffeinspritzungsbeginns und der Zündung die Klappenöffnungsdauer durch Wiederauffinden der entsprechenden Werte aus einer im voraus im Speicher (56) gespeicherten Aufzeichnung und den Zeitpunkt des Kraftstoffeinspritzungsbeginns entsprechend der Drehzahl (N) des Motors und der entsprechenden Klappenöffnungsdauer so bestimmen, daß die Klappenöffnungsdauer vor Erreichen des Zündzeitpunktes beendet wird.

2. System gemäß Anspruch 1, in dem die Einspritzdüsen (4; 104) Einrichtungen (13) zur Ermittlung des Einspritzzeitpunktes, die den Zeitpunkt des Beginns der Kraftstoffeinspritzung ermitteln, und Korrektureinrichtungen (55, 56, 67, 72), die den Zeitpunkt des Einspritzungsbeginns der Einspritzdüsen (4; 104) so korrigieren, daß der von den Einspritzzeitpunkt-Ermittlungseinrichtungen (13) ermittelte Zeitpunkt des Kraftstoffeinspritzungsbeginns mit dem von den Einspritzungs-/Zündungs-Bestimmungseinrichtungen (55, 56, 72, 73; Fig. 14) bestimmten Zeitpunkt des Kraftstoffeinspritzungsbeginns übereinstimmt, aufweisen.

3. System gemäß Anspruch 1 oder 2, in dem die Einspritzzeitpunkt-Ermittlungseinrichtungen eine Kraftstoffdruckermittlungseinrichtung (13) aufweist, die im Kraftstoffversorgungsweg vor der Einspritzdüse (4; 104) vorgesehen ist.

4. System gemäß einem der Ansprüche 1 bis 3, in dem die ersten Bestimmungseinrichtungen (55, 56, 72, 73), den Zündzeitpunkt so bestimmen, daß der Zündzeitpunkt dann erreicht ist, wenn die Klappenöffnungsdauer verstrichen ist.

5. System gemäß einem der Ansprüche 1 bis 4, in dem die Zündsignal-Ermittlungseinrichtung (52) in der Leitung vorgesehen ist, die das Zündsignal an die Zündkerze einer der Verbrennungskammern zuführt und die das dorthin gelieferte Zündsignal ermittelt, und in dem die Schaltung (72) zur Erzeugung des Signals für den Kraftstoffeinspritzbeginn die Einspritzsignale nacheinander an die entsprechenden Einspritzdüsen (4) liefert.

6. System gemäß einem der Ansprüche 1 bis 5, in dem die Einspritzdüse (104) einen am Einspritzdüsenende vorgesehenen Kraftstoffrückhaltebereich (108) für die vorübergehende Zurückhaltung des eingespritzten Kraftstoffs und eine Vibrationseinrichtung (107, 110) für die Vibration des Kraftstoffrückhaltebereiches (108), so daß der darin zurückgehaltene Kraftstoff zerstäubt und in die Verbrennungskammer gestreut wird, aufweist.

7. System gemäß Anspruch 6, in dem die Einspritzdüse (104) den Kraftstoff in dem Kraftstoffrückhaltebereich (108) einspritzt, bevor der Druck in der Verbrennungskammer in jedem Verdichtungshub einen vorbestimmten Wert übersteigt, und die Vibrationseinrichtung (107, 110) dazu veranlaßt, den Kraftstoffrückhaltebreich (108) in Schwingungen zu versetzen, und dabei den Kraftstoff zu zerstäuben und den zerstäubten Kraftstoff in die Verbrennungskammer einzustreuen, bevor der Zündzeitpunkt erreicht ist.

8. System gemäß einem der Ansprüche 1 bis 7, in dem die Einspritzdüse (104) Verzögerungseinrichtungen (107, 108, 135, 136) für die Einstreuung des während der Klappenöffnungsdauer eingespritzten Kraftstoffes in die Verbrennungskammer (103) mit einer vorbestimmten Verzögerungszeit in bezug auf die Kraftstoffeinspritzung aufweist.

9. System gemäß eine der Ansprüche 6 bis 8, in dem der Kraftstoffrückhaltebereich die Form einer Kuppel besitzt und ein gegenüber der Zündkerze (14) ausgebildetes Einspritzloch aufweist.

10. System gemäß Anspruch 9, in dem die Kuppel aus einem porösen Material hergestellt ist.

11. System gemäß einem der Ansprüche 6 bis 10, in dem die Vibrationseinrichtung ein Vibrationselement (107) und einen Oszillator (110), der elektrische Leistung an das Vibrationselement (107) liefert, um dieses zu Schwingungen zu veranlassen, aufweist.

12. System gemäß Anspruch 13, in dem das Vibrationselement (107) ein Ultraschall-Vibrationselement ist.

13. System gemäß Anspruch 11 oder 12, in dem der Oszillator (110) ein Ausgangssignal mit einer Frequenz, die gleich der Eigenfrequenz des Vibrationselementes (107) ist, erzeugt und an das Vibrationselement (107) liefert.

14. System gemäß einem der Ansprüche 11 bis 13, in dem der Oszillator (110) die Schwingungsamplitude des Vibrationselementes (107) in Abhängigkeit von der Klappenöffnungsdauer ändert.

15. System gemäß einem der Ansprüche 8 bis 14, in dem die Verzögerungseinrichtungen ein am Einspritzdüsenende vorgesehenes zylindrisches Bauteil aufweisen.

16. System gemäß einem der Ansprüche 1 bis 15, in dem die Einspritzdüse (104) als Einspritzventil ein Ablaßventil aufweist.

17. System gemäß einem der Ansprüche 6 bis 16, in dem der Kraftstoffrückhaltebereich (108) vor Erreichen des Zündzeitpunktes in Schwingungen versetzt wird.

18. System gemäß einem der Ansprüche 6 bis 17, in dem die Vibrationseinrichtungen (107, 110) den Kraftstoffrückhaltebereich (108) in Schwingungen versetzen, nachdem der Druck in der Verbrennungskammer (103) einen vorbestimmten Wert überschritten hat.

19. System gemäß Anspruch 18, in dem die Vibrationseinrichtung (107, 110) unmittelbar vor der Zündung die Vibration des Kraftstoffrückhaltebereiches (108) beendet.

## Revendications

1. Système d'alimentation en carburant, à commande électronique, pour des moteurs à combustion interne du type à injection, comportant une pluralité de chambres de combustion équipées chacune d'un injecteur de carburant (4; 104), un trajet pour l'air d'admission, envoyant l'air aux chambres de combustion, et un trajet d'échappement refoulant les gaz d'échappement hors des chambres de combustion, comprenant
- un actionneur (10) servant à actionner le papillon des gaz (9) situé dans le trajet de l'air d'admission,
- des moyens (3; 55) de détection de la vitesse, détectant la vitesse de rotation (N) du moteur,
- des moyens d'instruction (1) (par exemple une pédale d'accélérateur) fournissant une instruction de fonctionnement du moteur,
- des moyens (55, 56, 72, 73) de détermination de la séquence de déclenchement de l'injection de carburant et de la séquence d'allumage, déterminant la durée d'ouverture de la soupape de l'injecteur de carburant (4; 104) sur la base d'un signal d'instruction délivré par les moyens d'instruction (1) et de la vitesse de rotation (N), par récupération de la valeur correspondante de la durée d'ouverture de la soupape, à partir d'une mémoire (56), dans laquelle une mémorisation préalable a été exécutée, et déterminant la séquence de déclenchement de l'injection du carburant et la séquence d'allumage,
- des moyens (55, 56) de détermination de la quantité d'air, déterminant la quantité d'air devant être aspirée dans le trajet de l'air d'admission, sur la base de la vitesse de rotation et de la durée d'ouverture de la soupape déterminée par les moyens (55, 56, 72, 73) de détermination de la séquence de déclenchement de l'injection de carburant et de la séquence d'allumage, et
- des moyens de commande (10; 60, 66, 70, 74) commandant, en boucle fermée, la quantité d'air d'admission par l'intermédiaire de l'actionneur (10) du papillon des gaz de manière que la quantité d'air d'admission (qa) détectée par un débitmètre d'air (11) coïncide avec la quantité d'air d'admission (Qa) déterminée par les moyens (55, 56) de détermination de la quantité d'air,
caractérisé en ce que les moyens (55, 56, 72, 73) de détermination de la séquence de déclenchement de l'injection de carburant et de la séquence d'allumage déterminent la durée d'ouverture de la soupape, au moyen de l'extraction de valeurs correspondantes à partir d'une carte mémorisée antérieurement dans la mémoire (56), et la séquence de déclenchement de l'injection de carburant, conformément à la vitesse de rotation (N) du moteur et à la durée correspondante d'ouverture de la soupape, de sorte que la durée d'ouverture de la soupape se termine avant que l'instant d'allumage soit atteint.

2. Système selon la revendication 1, dans lequel les injecteurs de carburant (4; 104) comportent des moyens (13) de détection de la séquence d'injection, détectant l'instant de déclenchement de l'injection de carburant, et des moyens de correction (51, 56, 67, 72) corrigeant la séquence de déclenchement de l'injection des injecteurs de carburant (4; 104) de telle sorte que la séquence de déclenchement de l'injection de carburant, détectée par les moyens (13) de détection de la séquence d'injection, coïncide avec la séquence de déclenchement de l'injection de carburant déterminée par les moyens (55, 56, 72, 73; figure 14) de détermination de l'injection/allumage.

3. Système selon la revendication 1 ou 2, dans lequel les moyens de détection de la séquence d'injection comprennent des moyens (13) de détection de la pression du carburant, prévus dans le trajet d'alimentation en carburant en amont de l'injecteur de carburant (4, 104).

4. Système selon l'une des revendications 1 à 3, dans lequel les premiers moyens de détermination (55, 56, 72, 73) déterminent la séquence d'allumage de telle sorte que l'instant d'allumage intervient après l'écoulement de la durée d'ouverture de la soupape.

5. Système selon l'une des revendications 1 à 4, dans lequel il est prévu, dans la ligne envoyant le signal d'allumage à la bougie d'allumage de l'une des chambres de combustion, des moyens (52) de détection du signal d'allumage, qui détectent le signal d'allumage envoyé à cette bougie, et un circuit (72) de production de signaux de commande séquentielle de l'injection de carburant applique successivement des signaux d'injection aux injecteurs respectifs de carburant (4).

6. Système selon l'une des revendications 1 à 5, dans lequel l'injecteur (104) comporte une partie (108) de retenue du carburant, prévue au niveau de l'extrèmité d'injection du carburant pour la retenue temporaire du carburant injecté, dans cette partie, et des moyens vibrants (107, 110) servant à faire vibrer la partie (108) de retenue du carburant de manière que le carburant retenu dans cette partie soit atomisé et dispersé dans la chambre de combustion.

7. Système selon la revendication 6, dans lequel l'injecteur (104) injecte du carburant dans la partie (108) de retenue du carburant avant que la pression dans la chambre de combustion dépasse une valeur prédéterminée lors de chaque course de compression et amène les moyens vibrants (107, 110) à faire vibrer la partie (108) de retenue du carburant afin d'atomiser et de disperser le carburant atomisé à l'intérieur de la chambre de combustion avant que l'instant d'allumage soit atteint.

8. Système selon l'une des revendications 1 à 7, dans lequel l'injecteur (104) contient des moyens de retardement (107, 108, 135, 136) servant à disperser le carburant injecté pendant la durée d'ouverture de la soupape, dans la chambre de combustion (103), avec un retard prédéterminé par rapport à l'injection du carburant.

9. Système selon l'une des revendications 6 à 8, dans lequel la partie de retenue du carburant se présente sous la forme d'un dôme comportant un trou d'injection formé en vis-à-vis de la bougie d'allumage (14).

10. Système selon la revendication 9, dans lequel le dôme est réalisé en un matériau poreux.

11. Système selon l'une des revendications 6 à 10, dans lequel les moyens vibrants incluent un élément vibrant (107) et un agitateur (110) envoyant une énergie électrique à l'élément vibrant (107) pour le faire vibrer.

12. Système selon la revendication 13, dans lequel l'élément vibrant (107) est un élément vibrant ultrasonore.

13. Système selon la revendication 11 ou 12, dans lequel l'oscillateur (110) produit et applique à l'élément vibrant (107) un signal de sortie possédant une fréquence égale à une fréquence naturelle de l'élément vibrant (107).

14. Système selon l'une quelconque des revendications 11 à 13, dans lequel l'oscillateur (110) modifie l'amplitude de la vibration de l'élément vibrant (107) en fonction de la durée d'ouverture de la soupape.

15. Système selon l'une des revendications 8 à 14, dans lequel les moyens de retardement incluent un élément cylindrique prévu sur l'extrémité d'injection du carburant.

16. Système selon l'une des revendications 1 à 15, dans lequel l'injecteur de carburant (104) inclut une soupape en forme de champignon en tant que soupape d'injection.

17. Système selon l'une quelconque des revendications 6 à 16, dans lequel la partie (108) de retenue du carburant est mise en vibrations avant que l'instant d'allumage soit atteint.

18. Système selon l'une des revendications 6 à 17, dans lequel les moyens vibrants (107, 110) commencent à faire vibrer la partie (108) de retenue du carburant une fois que la pression régnant dans la chambre de combustion (103) dépasse une valeur prédéterminée.

19. Système selon la revendication 18, dans lequel les moyens vibrants (107, 110) arrêtent la vibration de la partie (108) de retenue du carburant, juste avant l'allumage.

# F I G. I

EP 0 095 190 B1

# F I G. 2

STARTER SW.

NEUTRAL SW.
THROTTLE SW.

56 ROM

55 MPU

57 RAM

63 DIGITAL INPUT CIRCUIT

58 DIGITAL OUTPUT CIRCUIT

71

70

FUEL PUMP 8

BATTERY VOLT.
COOLING WATER TEMP. SENSOR 5
O₂ SENSOR 6
ACCEL. PEDAL ANGLE SENSOR 1

64 A/D CONVERTER CIRCUIT

72 FUEL INJECTION TIMING SIGNAL GENERATING CIRCUIT

FUEL INJECTOR 4

CRANK ANGLE SENSOR 3
CYLINDER DET. SIGNAL 52

65 ANGLE SIGNAL CONVERTER CIRCUIT

68

OUTPUT CIRCUIT

AIR FLOW METER 11

60 AIR FLOW METER DRIVING CIRCUIT

66 INTAKE AIR QUANTITY A/D CONVERTER CIRCUIT

73 IGNITION ADVANCE ANGLE GENERATING CIRCUIT

IGNITION COIL 15

FUEL PRESSURE SENSOR 13

61 FUEL PRESS. SENSOR DRIVING CIRCUIT

67 FUEL PRESS. SIGNAL A/D CONVERTER CIRCUIT

74 THROTTLE VALVE ACTUATOR SIGNAL GENERATING CIRC.

THROTTLE VALVE ACTUATOR 10

PRO-GRAMMABLE TIMER

59

2

# F I G. 3

# F I G. 4

(A) INPUT CURRENT TO PILOT VALVE 22

(B) LIFT OF NEEDLE 28

(C) PRESSURE IN ACCUMULATOR 20

(D) LIFT OF NEEDLE 26

# F I G. 5

# F I G. 6

# F I G. 7

# FIG. 8

# F I G. 9

# F I G. IO

# F I G. 11

CYLINDER PRESSURE

L1

TDC    BTDC    TDC    BTDC    TDC

SUCTION   COMPRESSION   EXPLOSION   EXHAUST

L2

L3

# F I G. 12

# F I G. 13

# F I G. 14

```
              ▽
              │
      ┌───────────────┐  ╭── 80
      │ FETCHING      │
      │ ACCELERATOR   │
      │ PEDAL ANGLE   │
      │ SIGNAL θa     │
      └───────────────┘
              │
      ┌───────────────┐  ╭── 81
      │ FETCH         │
      │ ENGINE        │
      │ SPEED N       │
      └───────────────┘
              │
   ┌──────────────────────┐  ── 82
   │ RETRIEVE VALVE       │
   │ OPEN DURATION Tf FROM │
   │ MAP ON THE BASIS OF   │
   │ θa AND N              │
   └──────────────────────┘
              │
   ┌──────────────────────┐  ── 83
   │ RETRIEVE INTAKE  AIR  │
   │ QUANTITY  AND INJECTION│
   │ INITIATION  TIMING FROM│
   │ MAP ON THE BASIS OF   │
   │ N AND Tf              │
   └──────────────────────┘
              │
   ┌──────────────────────┐  ── 84
   │ RETRIEVE  IGNITION    │
   │ TIMING Tinj FROM MAP ON│
   │ THE BASIS OF          │
   │ N AND Tf              │
   └──────────────────────┘
              │
              △
```

14

## F I G. 15A

## F I G. 15B

## F I G. 15C

# F I G. 16

# F I G. 17

# F I G. 18

# F I G. I9A

TDC — SUCTION
BDC — COMPRESSION
TDC — EXPLOSION

P

t

INJECTION VALVE A

VIBRATION ELEMENT B

IGNITION PLUG C

# F I G. I9B

INJECTION VALVE A

VIBRATION ELEMENT B

IGNITION PLUG C

# F I G. I9C

INJECTION VALVE A

VIBRATION ELEMENT B

IGNITION PLUG C

19

# F I G. 20A

# F I G. 20B

# F I G. 21A

AMPLITUDE

FUEL QUANTITY / PULSE

# F I G. 21B

INPUT POWER (W)

FUEL QUANTITY / PULSE

21

# F I G. 22

F I G. 23

EP 0 095 190 B1

FIG. 24

FIG. 25

FIG. 26